# EUROPEAN PATENT APPLICATION

(11) **EP 3 453 845 A1**
(43) Date of publication of application: **13.03.2019**
(21) Application number: 18189733.1
(22) Date of filing: 20.08.2018
(51) Int. Cl.: F01D 25/12, F02C 6/08, F02C 7/12, F02C 7/18

(54) **HEAT EXCHANGE SYSTEMS FOR TURBOMACHINES**

(30) Priority: 06.09.2017 GB 201714293
(71) Applicant: Rolls-Royce plc, London SW1E 6AT (GB)
(72) Inventor: Peace, Richard, Derby, Derbyshire DE24 8BJ (GB); Goulds, Robert, Derby, Derbyshire DE24 8BJ (GB)
(74) Representative: Rolls-Royce plc

(57) **Abstract**

The disclosure concerns a heat exchange system or cooling system for a flow machine (10) having a cooling duct (30) with a coolant inlet opening (32) and a closure (34) for selectively opening the inlet opening (32). A component (38) is arranged to be fluid washed by flow along the cooling duct (30). A flow injector (40) is spaced from the closure (34) along the cooling duct (30) and oriented to inject flow into the cooling duct (30) in a direction that creates a negative fluid pressure downstream of the closure (34), wherein the closure (34) is openable in response to said negative pressure. The component may be a heat exchanger (38). The flow injector (40) may be fed by a compressor (14, 15) of the flow machine (10).

## Description

The present disclosure concerns heat exchange systems for turbomachinery, such as gas turbine engines.

It is known to use air as a coolant in a number of gas turbine engine applications. For heat exchangers in gas turbine engines, the bypass duct is often used as a source of relatively cool air. The obstruction of the bypass duct results in aerodynamic losses and so it is typically proposed to bleed air from the bypass duct through an opening to a cooling duct for communication with a heat exchanger.

In the example of an air-oil heat exchanger, the oil flowing through the heat exchanger is cooled before returning to the engine.

The opening into the bypass duct, and airflow along the cooling duct, represent ongoing efficiency losses for the engine. Conventional designs typically induce drag within the bypass duct, especially when the cooling system is not active. The resulting air path becomes restricted and has a negative impact on the fuel burn performance of the engine.

When providing for variable or selective operation of the heat exchanger, modulation of the oil flow is used to control oil flow through or around the heat exchanger, e.g. to short-circuit the heat exchanger, and thereby control the cooling effect on the oil.

There is proposed an additional or alternative system for controlling heat exchange and/or a cooling flow for turbomachinery.

According to the present disclosure there is provided a cooling system for a flow machine, the cooling system comprising a cooling duct and a component arranged to be fluid washed by flow along the cooling duct, the cooling duct having a coolant inlet opening and a closure for selectively opening the inlet opening, wherein the cooling duct further comprises a flow injector spaced from the closure and oriented to inject flow from a fluid pressure source into the cooling duct in a direction that creates a negative fluid pressure downstream of the closure, wherein the closure is openable in response to said negative pressure.

Where the term negative fluid pressure is used, this may mean reduced (or negative) fluid pressure in the cooling duct (and/or downstream of the closure) relative to a condition in which fluid is not injected into the flow by the flow injector.

The fluid pressure source may comprise a compressor, e.g. a compressor of the flow machine. The fluid pressure source may comprise a stage of the compressor. An opening may be provided in the compressor casing.

The flow injector may be oriented to inject flow into the cooling duct in a direction away from the closure. The flow injector may have an outlet facing away from the closure, e.g. in the downstream direction. The flow injector may comprise an outlet that is oriented substantially parallel with a longitudinal axis of the cooling duct.

The flow injector may extend into the cooling duct. The flow injector may comprise an elbow within the cooling duct.

The flow injector may be located downstream of the closure in the direction of coolant flow along the cooling duct. The flow injector may be located downstream of the component.

The flow injector may be selectively fed by the compressor. A flow controller, e.g. a valve, may be provided in the flow path between the compressor and flow injector. The valve may be under the control of a controller. The valve may be variably openable.

The cooling duct may comprise a restriction, neck or venturi in the vicinity of the flow injector. The flow injector may be mounted in said formation.

The closure may be openable at least in part by the negative pressure in the cooling duct. The closure may be a fluid pressure actuatable closure. The closure may be openable and/or closeable by fluid pressure actuation.

The closure may be openable in a direction into the cooling duct.

The closure may be flush with the inlet opening and/or a wall having the inlet opening therein when closed.

The closure may be biased towards a closed condition. The closure may comprise a resilient member, e.g. resisting opening of the closure. The closure may be tailored to resiliently/reversibly yield or deform in response to the negative pressure.

The closure may be hinged.

The closure may be a passive closure, e.g. devoid of an electromechanical actuator and/or operating in response to fluid pressure only.

The flow machine and/or cooling system may comprise a casing. The casing may comprise an inner wall facing an interior of the flow machine and an outer wall. The inlet opening may be provided in the outer wall. The casing may surround an axis of rotation of the flow machine and/or the compressor.

The inlet opening may be provided in a wall of the casing arranged to be washed by a flow around the flow machine. The inlet opening may be gas washed, e.g. opening into an airflow.

The casing may comprise an internal cavity, e.g. through which the cooling duct may extend.

The flow machine may comprise a bypass duct. The inlet opening may open into the bypass duct. The flow machine may comprise a core engine and the bypass duct may bypass the core engine.

The component may comprise a heat exchanger. The component may comprise an internal flow path for fluid to be cooled. The fluid to be cooled may comprise a operating fluid/liquid of the flow machine, such as a lubricant/oil or other heat transfer fluid. An air-oil heat exchanger or air-air heat exchanger may be provided.

The component may comprise a heat sink.

The component may be located in flow series between the inlet opening and the flow injector, e.g. along the cooling duct.

The flow machine may comprise an axial flow machine and/or propulsion engine.

The flow machine may comprise a turbine.

The flow machine may comprise a turbomachine, such as gas turbine engine. The flow machine may comprise an aircraft engine.

According to a further aspect there may be provided a gas turbine engine comprising a cooling system as defined herein.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
**Figure 1** is a sectional side view of a gas turbine engine;
**Figure 2** is a schematic sectional side view of a heat exchange system with a closed duct;
**Figure 3** is a schematic sectional side view of a heat exchange system with an open duct;
**Figure 4** is a detailed view of the closure of Figure 2;
**Figure 5** is a detailed view of the heat exchanger and flow injector of Figure 2 or 3;
**Figure 6** is a schematic sectional side view of the flow injector; and,
**Figure 7** is a front view of a flow injector facing the flow openings thereof.

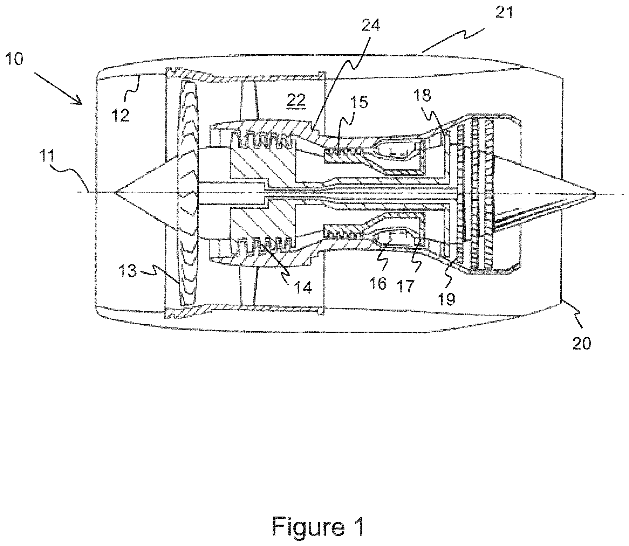

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the airflow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines (e.g. one or two). Further the engine may comprise a gearbox provided in the drive train from a turbine to a compressor and/or fan.

Specific examples of the present disclosure are described in relation to gas turbine engines of the type described above in relation to Figure 1, e.g. propulsion turbomachinery. However the invention may be applied to other gas turbine engine installations, other propulsive turbomachine applications or other axial flow machines where cooling ducts are used for heat exchange applications within the machine.

In Figure 1, there is shown a casing structure 24 surrounding the intermediate and/or high pressure compressor(s) 14, 15. The casing is an annular structure surrounding the principal axis 11 and shaped so as to define an internal volume or enclosure within which components of the engine may be mounted.

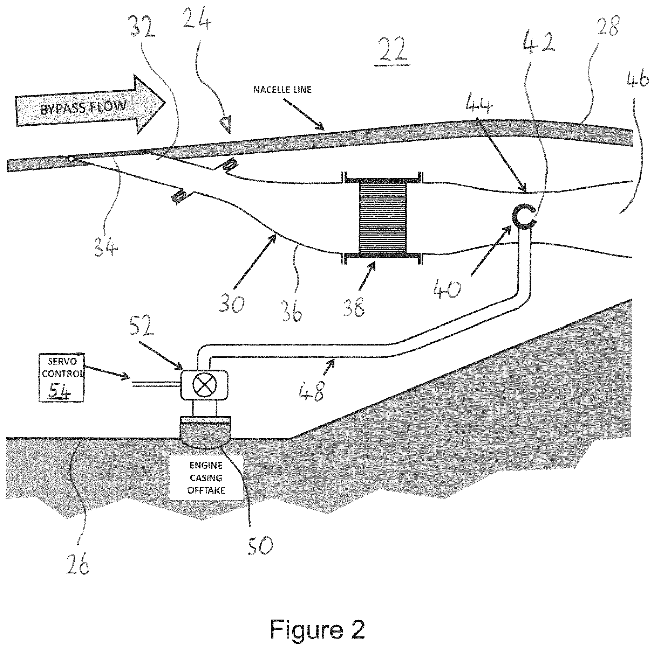

Turning to Figure 2, there is shown an example of the casing structure 24, which has a radially inner wall 26 surrounding the relevant compressor and a radially outer wall 28 which defines an inner wall portion, e.g. a radially inner wall, of the bypass duct 22. The wall 28 is gas washed by airflow along the bypass duct 22 induced by the fan 13. The casing structure may be referred to as a core engine nacelle, e.g. as distinct from the fan nacelle 21 of Figure 1.

A heat exchange system is mounted in the internal cavity of the casing 24.

The heat exchange system comprises a duct 30 having an upstream/inlet end 32 for receiving air from the bypass duct 22. The inlet end defines an opening or mouth in the wall 28 such that the duct 30 defines a branch duct off the bypass duct. The duct 30 is oriented obliquely to the direction of the bypass duct 22, at least at the inlet end 32. A portion of the air from the bypass duct can pass directly into the heat exchange duct 30, when needed, for use in cooling one or more component as will be described below.

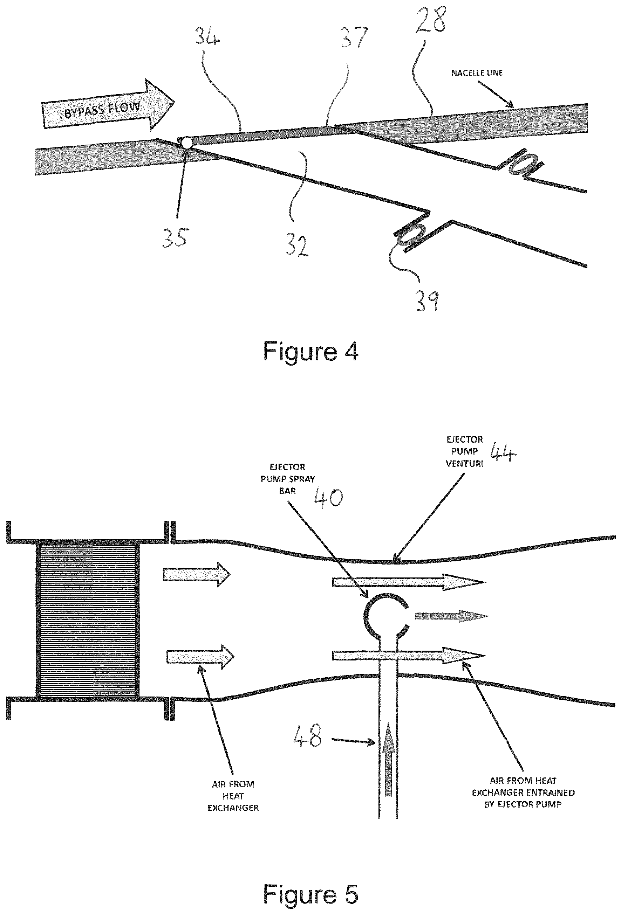

However the inlet end of the duct 30 comprises a closure 34, shown in a closed condition in Figures 2 and 4. The closure is arranged to be flush with the surface of the wall 28 of the bypass duct 22 when closed. The closure surface may be shaped to match that of the wall 28. The flow along the bypass duct 22 experiences minimal disturbance when the closure 34 is closed.

The closure 34 may be closed when at-rest, i.e. when not acted on by external forces. The closure 34 acts as an inlet valve or door to the heat exchange duct 30. The closure 34 may be a core engine nacelle closure.

The closure 34 is pivoted/hinged and biased to a closed condition by a resilient biasing member, such as a spring or other suitable resiliently deformable member. The biasing member is loaded to bias the closure 34 to a closed condition. The resilient bias is tailored so that the biasing force can be overcome by a suitable fluid pressure differential on opposing sides of the closure 34. The spring may be tailored such that the positive pressure caused by the bypass flow alone is insufficient to open the closure. However the application of a negative (e.g. sub-ambient) fluid pressure on the internal side of the closure within the duct 30 is sufficient to open the closure 34 as will be described below.

The closure is hinged at the upstream side thereof in the flow direction along the bypass duct 22, shown as from left to right in Figures 2 and 4.

A hinge spring 35 is provided in this example, which is loaded to bias the closure 34 to the closed position.

The closure 34 may be referred to as a flap or flap valve.

The angle of the heat exchange duct 30 joining the bypass duct 22 may form a profiled/angled edge or lip in the wall 28. The free end/edge 37 of the closure 34 may be correspondingly profiled, i.e. to match that of the opposing wall edge. The wall thickness of wall 28 may taper towards the edge of the inlet opening 32. The free edge 37 of the closure 34 may be tapered.

Also shown in Figure 4 is a seal 39 for joining a main portion of the duct 30 to an upstream portion of the duct comprising the inlet opening 32. The duct portions may each comprise opposing flange portions such that a seal can be inserted there-between and the opposing flanges can be fastened in a conventional manner. The seal 39 in this example is a kiss seal

The duct 30 comprises a sloping wall portion or expansion 36 so as to create an enlarged flow area part way along its length. The increase in internal flow area of the duct acts as a diffuser, i.e. reducing the flow speed along the duct in use. The inlet end 32 is of narrower dimension, e.g. taking the form of a neck.

A heat exchanger 38 is mounted in the duct 30, e.g. in the enlarged flow area portion of the duct. The heat exchanger has a thermally conductive surface which is presented to the oncoming airflow in the duct 30. The heat exchanger in this example comprises an internal flow passage for a fluid medium to be cooled, such as hot oil from the engine. Thus the fluid in the heat exchanger will lose thermal energy to the oncoming air flow along the duct 30.

In other examples, the heat exchanger could be an air/air heat exchanger or else could be a simple heat sink. Any conventional heat exchange components to be cooled could be mounted instead of, or in addition to, heat exchanger 38. In other examples, the component to be cooled need not be entirely contained within the duct, for example the duct being arranged to direct cooling flow onto an engine component to be cooled or into an engine zone to be cooled or onto another portion of the engine casing to be cooled. In some examples, it is possible that the duct could lead to, or comprise a cooling manifold.

Mounted within the duct is a flow injector 40, having an outlet opening 42 that feeds into the interior of the duct 30, in this example downstream of the component 38 to be cooled.

In the illustrated example, the flow injector 40 is mounted at a restriction in the duct 30, such as a neck or venturi 44, but other arrangements may have the flow injector provided elsewhere (i.e. not in a venture portion). Where a venturi is present, it may be formed by sloping wall portions of the duct converging so as to restrict the available flow area and thereby accelerate flow through the restriction in use.

The flow injector outlet 42 faces away from the inlet end 32 of the duct 30, e.g. towards an outlet end 46 in this example. That is to say the outlet faces a downstream direction in a direction of flow from the inlet 32 along the duct 30.

The duct 30 diverges downstream of the venturi 44, e.g. towards the duct outlet end 46.

The flow injector 40 is connected to a fluid pressure source, e.g. a compressor of the engine 10. The flow injector 40 is connected by a flow pipe 48 to a compressor of the engine, e.g. via an engine casing offtake opening 50. Any suitable compressor stage may be used provided it satisfies the flow requirements of the injector 40.

A control valve 52 is used to selectively control flow to the injector 40. The control valve may be under servo control, e.g. having a valve actuator under the control of signals received from a controller 54. A heat exchange demand may be determined by the controller, which outputs a demand signal to control opening of the valve when operation of the cooling system is required. A simple open/closed valve may be used or else a variably openable valve.

Further optional details of the flow injector structure are shown in Figures 5 to 7. The flow injector 40 in this example is mounted within the duct interior, i.e. spaced from the duct wall.

The outlet 42 takes the form of an outlet nozzle shaped to create a jet 56 expelled by the injector 40.

The injector 40 comprises a head formation 58 in the flow path from the flow pipe 48 to the outlet 42, e.g. immediately upstream of the outlet. The head formation is spaced from the duct wall by a length of flow pipe depending into the duct 30 through the duct wall.

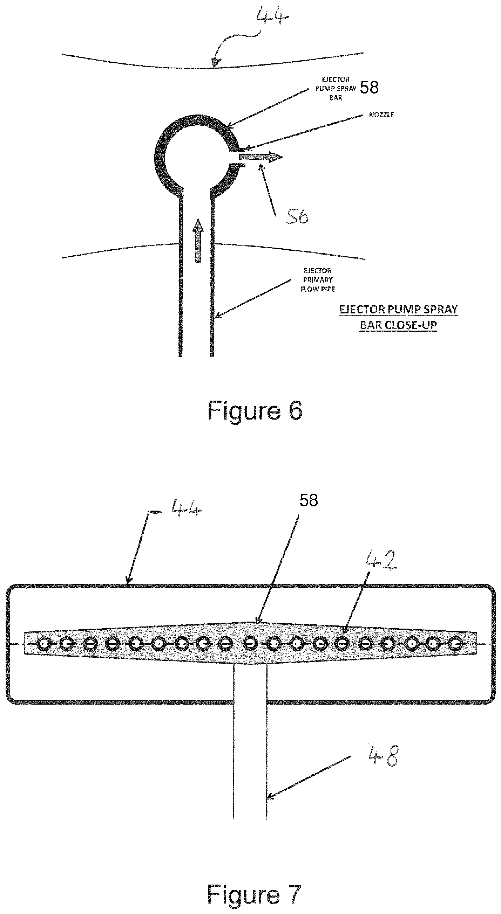

The head formation 58 in this example comprises a manifold such that the injector comprises a plurality of outlets 42 fed by the flow pipe 48. The injector 40 may thus take the form of an injector bar in which outlet nozzles are arranged in an array, e.g. in a line, along the injector bar. The outlet nozzles may all face in the same flow direction as shown in Figure 7, which is a view from downstream of the injector 40.

The injector head formation 58 tapers from its central region, i.e. the point of connection to the flow pipe 48, towards its lateral edges. The injector head 58 and/or array of outlets may be configured/shaped for fluid dynamic purposes, i.e. to achieve the desired flow regime in the duct.

The duct 30, e.g. in the vicinity of the venturi 44, may be shaped to correspond to the injector or the array of outlets 42. In this example, the duct is substantially rectangular in section, at least in the vicinity of the injector 40.

When the heat exchange system is not in use, the closure 34 remains closed and flow along the bypass duct is undisturbed. In use, when a cooling/heat exchange requirement has been determined by the controller, the control valve 52 is opened so as to supply high pressure air to the injector 40.

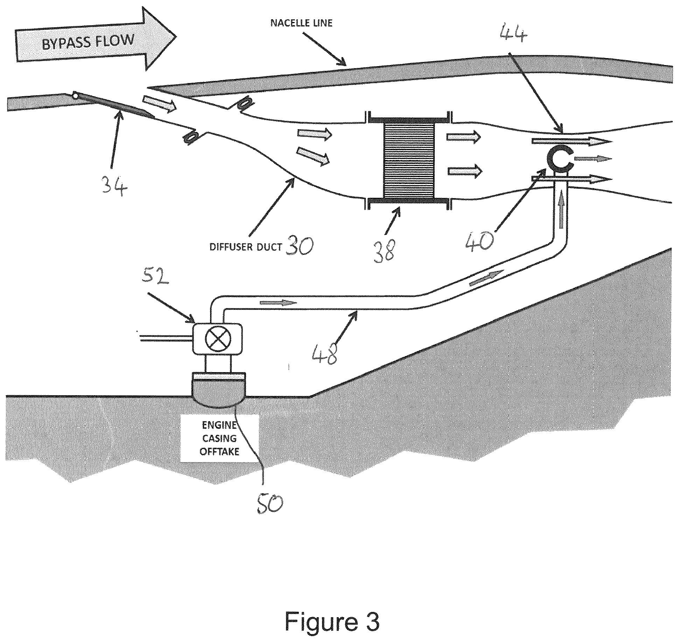

The air is expelled by the injector into the duct via the outlet nozzles 42 in a downstream direction indicated at 56. This instigates a flow in the duct 30 that creates a negative fluid pressure in the duct 30 upstream of the injector 40 (e.g. a flow demand the duct between the injector and the closure). When the closure 34 is closed as shown in Figure 2, the negative fluid pressure is present on the inside of the closure 34, thereby increasing the pressure differential on the opposing sides of the closure 34 until the pressure differential is sufficient to overcome the biasing of the closure. At this point, the closure opens, allowing the bypass flow to enter the duct 30 via the inlet 32 as shown in Figure 3.

The flow along the duct 30 cools the heat exchanger 38 and passes over the injector 40 before exiting the duct. The cooling air flow is entrained by the injector flow within the duct, e.g. at the venturi 44, and mixes with the injector flow downstream of the injector.

The invention may be considered to derive from the principle of selectively sucking open a closure for a heat exchange system that is not required to be used all the time. The invention may be advantageous because it avoids the need for an electrically-powered actuator, whilst also allowing the flow losses in the bypass flow to be avoided when the heat exchange system is not needed. Actuation of any drag-reducing device in this casing/nacelle portion is conventionally considered to be impractical due to there being no linkage back to a source of motive power.

The flow injector is mounted downstream of the component 38 to be cooled in the examples described above. This may be optimal for cooling applications if the flow source for the injector 40 is hotter than the bypass flow. However it may not be essential since flow from the injector can be mixed with flow from the bypass duct 22 within the heat exchange duct 30 once the closure 34 is open. Thus the mixed flows may provide an adequate cooling effect.

Furthermore, it may be possible that once the closure 34 has been opened, the flow through the injector 34 could potentially be reduced, whilst still maintaining the open condition of the closure 34 due to the bypass flow through the inlet opening 32. In one example, the closure 32 could be loosely coupled/held in the closed position, e.g. in addition to the biasing force, such that, once opened, a reduced force is needed to maintain the open condition. A seal at the interface between the closure 32 and wall 28 may be used for this purpose, or another releasable/latching formation.

Whilst the term 'injector' has been used herein to refer to the component 40, it will be understood that the function of the component is as a negative fluid pressure inducer and so alternative terms or components that are functionally equivalent should be construed as falling within the scope of that term, such as, for example, 'flow ejector' or 'pump'.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

**1.** A cooling system for a flow machine comprising:
a cooling duct (30) having a coolant inlet opening (32) and a closure (34) for selectively opening the inlet opening;
a component (38) arranged to be fluid washed by flow along the cooling duct; and
a flow injector (40) spaced from the closure along the cooling duct and oriented to inject flow into the cooling duct in a direction that creates a negative fluid pressure downstream of the closure, wherein the closure is openable in response to said negative pressure.

**2.** A cooling system according to claim 1, wherein a fluid pressure source supplies the flow injector.

**3.** A cooling system according to claim 2, wherein the fluid pressure source comprises a compressor of the flow machine.

**4.** A cooling system according to claim 2 or 3, comprising a control valve (52) for controlling selective flow from the fluid pressure source to the flow injector.

**5.** A cooling system according to any preceding claim, wherein the flow injector is oriented to inject flow into the cooling duct in a direction away from the closure.

**6.** A cooling system according to any preceding claim, wherein the flow injector extends into the cooling duct.

**7.** A cooling system according to any preceding claim, wherein the flow injector is located downstream of the closure and the component in the direction of coolant flow along the cooling duct.

**7.** A cooling system according to any preceding claim, wherein the cooling duct comprises a venture (44) in the vicinity of the flow injector

**8.** A cooling system according to any preceding claim, wherein the closure is openable by the negative pressure in the cooling duct.

**9.** A cooling system according to any preceding claim, wherein the closure is biased to a closed condition.

**10.** A cooling system according to according to any preceding claim, wherein the closure is flush with the inlet opening and/or a wall having the inlet opening therein when closed.

**11.** A cooling system according to according to any preceding claim, wherein the closure is hinged at an upstream end thereof.

**12.** A cooling system according to any preceding claim, wherein the closure is opened by fluid pressure only.

**13.** A cooling system according to any preceding claim, comprising a nacelle or casing structure having an inner wall facing an interior of the flow machine and an outer wall that is fluid washed by a bypass flow around the flow machine, wherein the inlet opening is provided in the outer wall.

**14.** A cooling system according to any preceding claim, wherein the component comprises a heat exchanger.

**15.** A gas turbine engine (10) comprising a cooling system according to any preceding claim.
